# EUROPÄISCHE PATENTSCHRIFT

(11) **EP 1 924 460 B1**
(45) Veröffentlichungstag und Bekanntmachung des Hinweises auf die Patenterteilung: **18.03.2009**
(21) Anmeldenummer: 06777926.4
(22) Anmeldetag: 24.07.2006
(51) Int. Cl.: B60K 31/00

(54) **VORRICHTUNG ZUR LÄNGSFÜHRUNG EINES KRAFTFAHRZEUGS MIT NAVIGATIONSSYSTEM**
DEVICE FOR LONGITUDINALLY GUIDING A MOTOR VEHICLE WITH A NAVIGATION SYSTEM
DISPOSITIF DE GUIDAGE LONGITUDINAL D'UN VEHICULE AUTOMOBILE COMPRENANT UN SYSTEME DE NAVIGATION

(30) Priorität: 29.08.2005 DE 102005040776
(43) Veröffentlichungstag der Anmeldung: 28.05.2008
(73) Patentinhaber: ROBERT BOSCH GMBH, 70442 Stuttgart (DE)
(72) Erfinder: KLOTZ, Albrecht, 72631 Aichtal (DE); HOETZER, Dieter, 48331 Farmington Hills (DE); HAGEMANN, Markus, 70839 Gerlingen (DE); GIBSON, Brendan, 70176 Stuttgart (DE)
(86) Internationale Anmeldenummer: PCT/EP2006/064570
(87) Internationale Veröffentlichungsnummer: WO 2007/025807

(56) Entgegenhaltungen:
- EP-A1- 0 956 993
- DE-A1- 19 931 161

## Beschreibung

### Stand der Technik

Die Erfindung betrifft eine Vorrichtung zur Längsführung eines Kraftfahrzeugs, mit einem Sensorsystem zur Ortung vorausfahrender Fahrzeug, einem Regler, der die Geschwindigkeit des Fahrzeugs auf eine Sollgeschwindigkeit regelt, entweder in einem Freifahrtmodus oder in einem Folgefahrtmodus, in dem die Sollgeschwindigkeit vom Abstand zu einem vorausfahrenden Fahrzeug abhängig ist, sowie mit einer Schnittstelle zu einem Navigationssystem, das Informationen über die befahrene Route bereitstellt, und einer Begrenzungseinrichtung zur Begrenzung der Sollgeschwindigkeit anhand der bereitgestellten Informationen.

Solche Vorrichtungen zur Längsführung eines Kraftfahrzeugs werden auch als ACC-Systeme (Adaptive Cruise Control) bezeichnet und weisen als Sensorsystem typischerweise einen Radarsensor auf, mit dem die Abstände und Relativgeschwindigkeiten vorausfahrender Fahrzeuge gemessen werden können. Auf diese Weise ist es möglich, ein unmittelbar vorausfahrendes Fahrzeug, das sogenannte Zielobjekt, in einem geeigneten Abstand oder, genauer, mit einer geeignet gewählten Zeitlücke zu verfolgen. Im Freifahrtmodus, wenn kein Zielobjekt vorhanden ist, erfolgt eine Regelung auf eine Sollgeschwindigkeit, die bei den heute im Einsatz befindlichen Systemen durch eine vom Fahrer gewählte Wunschgeschwindigkeit gegeben ist.

Unter bestimmten Bedingungen, beispielsweise beim Durchfahren enger Kurven, kann es jedoch vorkommen, daß die Regelung nicht an die aktuelle Situation angepaßt ist, so daß die Kurve mit zu hoher Geschwindigkeit durchfahren würde. Der Fahrer ist dann gezwungen, selbst in die Längsführung einzugreifen und das ACC-System vorübergehend zu deaktivieren.

In DE 198 21 803 A1 und DE 199 31 161 A1 sowie EP0956993 werden Längsführungssysteme beschrieben, die eine Anbindung an ein ebenfalls im Fahrzeug vorhandenes Navigationssystem aufweisen, so daß die vom Navigationssystem bereitgestellten Routeninformationen, insbesondere die aus einer digitalen Karte ablesbare Information über die Krümmung des unmittelbar voraus liegenden Fahrbahnabschnitts, in die Geschwindigkeitsregelung einfließen können.

### Vorteile der Erfindung

Durch die Erfindung mit den in Anspruch 1 angegebenen Merkmalen wird die Anbindung des Längsführungssystems an das Navigationssystem so gestaltet, daß das Systemverhalten insgesamt für den Fahrer transparenter und plausibler wird.

Dies wird erfindungsgemäß dadurch erreicht, daß die Begrenzungseinrichtung dazu ausgebildet ist, sich bei einem Wechsel vom Freifahrtmodus in den Folgefahrtmodus selbst zu deaktivieren und sich bei einem Wechsel vom Folgefahrtmodus in den Freifahrtmodus selbst zu aktivieren.

Diese Funktionsweise beruht auf der Überlegung, daß das eigene Fahrzeug im Folgefahrtmodus den voraus liegenden Streckenabschnitt mit der gleichen Geschwindigkeit durchfahren kann, mit der auch das Zielobjekt diesen Streckenabschnitt durchfährt. Die Deaktivierung der Begrenzungseinrichtung hat dann den Vorteil, daß der Abstand zum Zielobjekt konstant gehalten wird und unnötige, der Intuition des Fahrers widersprechende und den Kraftstoffverbrauch erhöhende Verzögerungs- und Beschleunigungsvorgänge vermieden werden. Die Erfahrung zeigt nämlich, daß der Fahrer sich in Folgefahrt bei der Bewertung der eigenen Geschwindigkeit maßgeblich am Abstand zum vorderen Fahrzeug orientiert und deshalb Schwankungen dieses Abstands, für die er keine plausible Erklärung findet, als störend empfindet. Deshalb läßt sich die Akzeptanz des Systems deutlich steigern, wenn die Begrenzungseinrichtung nur im Freifahrtmodus aktiv ist.

Da sich anhand der vom Navigationssystem bereitgestellten Routeninformation die Farbahnkrümmung nur mit begrenzter Genauigkeit bestimmen läßt, ist es zweckmäßig, die Begrenzungseinrichtung so zu programmieren, daß sie bei der Berechnung des Grenzwertes für die Sollgeschwindigkeit einen bestimmten Sicherheitsabschlag berücksichtigt. Da die Begrenzungseinrichtung nur im Freifahrtmodus aktiv ist, wirkt sich dieser Sicherheitsabschlag im Folgefahrtmodus, wo er eher als störend empfunden würde, nicht aus.

Bei einem Verlust des Zielobjekts, beispielsweise wenn das vorausfahrende Fahrzeug abbiegt oder auf eine Nebenspur wechselt, geht das System in den Freifahrtmodus, und die Begrenzungseinrichtung wird automatisch aktiv, so daß die Fahrt mit einer angepaßten Geschwindigkeit fortgesetzt wird.

Vorteilhafte Ausgestaltungen und Weiterbildungen der Erfindung ergeben sich aus den Unteransprüchen.

Gemäß einer vorteilhaften Weiterbildung der Erfindung gibt es bestimmte Ausnahmen von der Regel, daß die Begrenzungseinrichtung nur im Freifahrtmodus aktiv sein soll. Insbesondere sollte die Begrenzungseinrichtung ausnahmsweise auch im Folgefahrtmodus aktiv sein, wenn es deutliche Anzeichen dafür gibt, daß die voraussichtliche Route des eigenen Fahrzeugs von der Route des Zielobjekts abweicht und die an die Route des eigenen Fahrzeugs angepaßte Geschwindigkeit deutlich niedriger ist als die voraussichtliche Geschwindigkeit des Zielobjekts. Ein typisches Beispiel ist die Situation, daß sich das eigene Fahrzeug einer Kreuzung oder Abzweigung annähert und der Fahrer etwa durch Setzen des Fahririchtungsanzeigers (Blinker) eine Abbiegeabsicht zu erkennen gibt, während das Zielobjekt geradeaus fährt. Ein allgemeineres Ausnahmekriterium besteht darin, daß erkennbar ist, daß sich die Route des eigenen Fahrzeugs von der Route des Zielobjekts unterscheidet und daß die Geschwindigkeit, mit der auf der Route des Zielobjekts gefahren werden kann, mindestens um einen bestimmten Schwellenwert über der Geschwindigkeit liegt, mit der auf der Route des eigenen Fahrzeugs gefahren werden kann. Die Geschwindigkeiten, mit denen auf den verschiedenen Routen gefahren werden kann, lassen sich anhand der vom Navigationssystem bereitgestellten Daten, insbesondere anhand der jeweiligen Fahrbahnkrümmungen bestimmen.

Wenn die Zielführungsfunktion des Navigationssystems aktiviert ist, ermöglicht die Annahme, daß der Fahrer des eigenen Fahrzeugs der von der Zielführungsfunktion berechneten Route folgen wird, eine Vorhersage der Route des eigenen Fahrzeugs.

Wenn es mehrere mögliche Routen für das eigene Fahrzeug gibt, beispielsweise vor einer Kreuzung oder Abzweigung, arbeitet die Begrenzungseinrichtung im Freifahrtmodus vorzugsweise so, daß sie für jede mögliche Route einen Grenzwert für die Sollgeschwindigkeit berechnet und den größten dieser Grenzwerte für die Begrenzung der Sollgeschwindigkeit auswählt.

Auf diese Weise wird erreicht, daß sich die Begrenzungseinrichtung auch dann, wenn die voraussicfitliche Fahrroute nicht klar ist, stets in einem definierten Zustand befindet und deshalb auch dann aktiv sein kann, wenn keine Information über die vom Fahrer voraussichtlich gewählte Route vorhanden ist. Bei der Annäherung an eine Kreuzung oder Weggabelung beruht die Funktionsweise der Begrenzungseinrichtung dann auf der Annahme, daß der Fahrer unter den verschiedenen denkbaren Routen diejenige wählen wird, die die größte Geschwindigkeit erlaubt. Diese Annahme muß zwar nicht immer zutreffend sein, sie schafft jedoch die Voraussetzung dafür, daß bei unbekannter Fahrtroute die Begrenzungseinrichtung überhaupt aktiv sein kann und somit jedenfalls auf den Streckenabschnitten, auf denen die Route eindeutig ist, eine automatische Geschwindigkeitsanpassung ermöglicht. Dabei wird bewußt in Kauf genommen, daß der Fahrer gelegentlich aktiv in die Längsführung eingreifen muß, nämlich immer dann, wenn er unter mehreren möglichen Routen diejenige wählt, die nur eine Fahrt mit kleinerer Geschwindigkeit erlaubt. In solchen Situationen, die ohnehin nur sporadisch auftreten werden, wird der Fahrer jedoch damit rechnen, daß die Begrenzungseinrichtung die angepaßte Geschwindigkeit nicht richtig vorhersagen kann, und er wird deshalb darauf vorbereitet sein, daß er aktiv in die Längsführung eingreifen muß. Die damit verbundene Beeinträchtigung des Komforts ist ohne weiteres hinzunehmen. Es überwiegt der Vorteil, daß in allen übrigen Situationen die Funktion der Begrenzungseinrichtung zur Verfügung steht.

### Zeichnung

Ausführungsbeispiele der Erfindung sind in den Zeichnungen dargestellt und in der nachfolgenden Beschreibung näher erläutert.

Es zeigen:
- Figur 1: ein Blockdiagramm der Längsführungsvorrichtung;
- Figur 2: eine Skizze einer Verkehrssituation, zur Illustration der Arbeitsweise der Vorrichtung; und
- Figur 3: ein Flußdiagramm zur Erläuterung der Arbeitsweise der Vorrichtung gemäß einer modifizierten Ausführungsform.

### Beschreibung der Ausführungsbeispiele

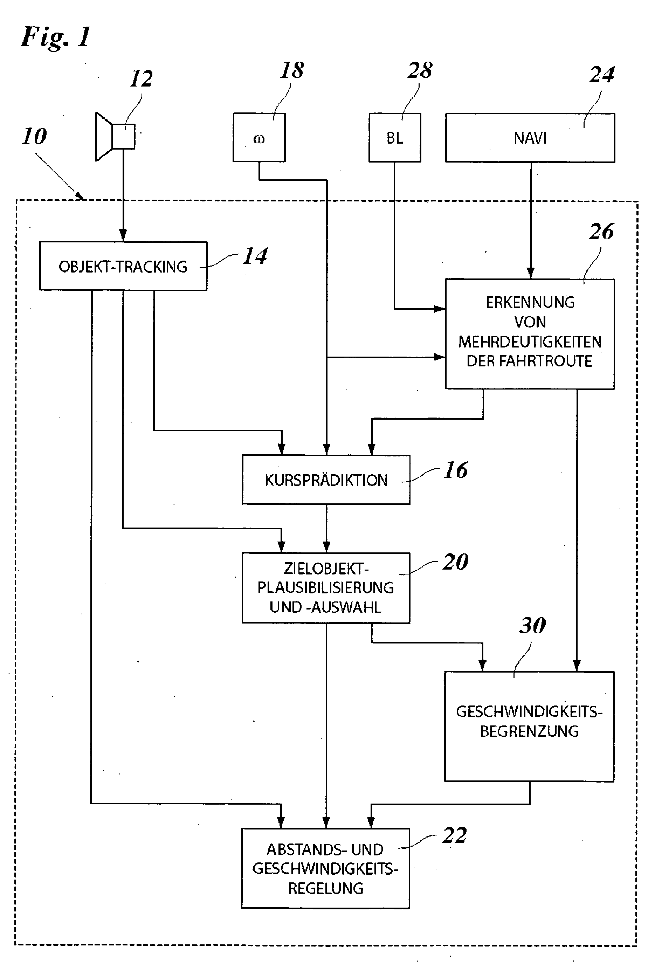

In Figur 1 ist ein ACC-System 10 dargestellt, dessen grundsätzlicher Aufbau und Wirkungsweise als bekannt vorausgesetzt werden können und deshalb hier nur kurz skizziert werden.

Ein vom im Fahrzeug eingebauter winkelauflösender Radarsensor 12 liefert Ortungsdaten (Abstände, Relativgeschwindigkeiten und Azimutwinkel) der georteten Objekte an das ACC-System 10. Die Meßdaten werden zyklisch aktualisiert. In einem Tracking-Modul 14 werden jeweils die aktuellen Meßdaten mit den Meßdaten aus vorangegangene Meßzyklen abgeglichen, so daß die Bewegungen der einzelnen Objekte verfolgt werden können.

Ein Kursprädiktionsmodul 16 dient zur Abschätzung des voraussichtlichen Kurses des eigenen Fahrzeugs. Hierzu wird im einfachsten Fall nur die Giergeschwindigkeit w des eigenen Fahrzeugs ausgewertet, die mit Hilfe eines Gierratensensors 18 gemessen wird und in Verbindung mit der Fahrgeschwindigkeit des eigenen Fahrzeugs eine Bestimmung der Fahrbahnkrümmung in dem gerade vom eigenen Fahrzeug durchfahrenen Fahrbahnabschnitt ermöglicht.

Anhand des prädizierten Kurses wird dann ein Fahrschlauch bestimmt, innerhalb dessen sich diejenigen Fahrzeuge befinden müssen, die als Zielobjekt für die Abstandsregelung in Frage kommen. Im einfachsten Fall handelt es sich bei diesem Fahrschlauch um einen Streifen mit einer gewissen Standardbreite, der dem prädizierten Kurs folgt.

In einem Plausibilisierungsmodul 20 werden dann die georteten und im Tracking-Modul 14 verfolgten Objekte plausibilisiert, d. h., für jedes Objekt wird eine Wahrscheinlichkeit dafür angegeben, daß es sich innerhalb des Fahrschlauches befindet. Dabei wird berücksichtigt, daß die Ortungsdaten, insbesondere die Querpositionsdaten, gewisse Fehlertoleranzen aufweisen, die mit zunehmendem Objektabstand größer werden. Wenn die Wahrscheinlichkeit dafür, daß sich das Objekt innerhalb des Fahrschlauches befindet, oberhalb eines bestimmten Schwellenwertes liegt, wird das Objekt "plausibilisiert", d. h., es wird als ein relevantes Objekt behandelt, das sich auf der eigenen Fahrspur befindet. Unter den so plausibilisierten Objekten wird dann schließlich dasjenige mit dem kleinsten Abstand als Zielobjekt für die Abstandsregelung ausgewählt.

In einem Regler 22 erfolgt anhand der Ortungsdaten des Zielobjekts die eigentliche Abstandsregelung durch Eingriff in das Antriebssystem und erforderlichenfalls auch das Bremssystem des Fahrzeugs, so daß das Zielobjekt mit einer vom Fahrer innerhalb gewisser Grenzen wählbaren Zeitlücke verfolgt wird. Ist kein Zielobjekt vorhanden, so befindet sich das System im Freifahrtmodus, und es erfolgt normalerweise eine Regelung auf eine vom Fahrer gewählte Wunschgeschwindigkeit.

Das hier beschriebene ACC-System 10 weist eine Schnittstelle zu einem Navigationssystem 24 des Fahrzeugs auf. Dieses Navigationssystem enthält eine in digitaler Form gespeicherte Straßenkarte und ermittelt mit Hilfe eines GPS-Systems (Global Positioning System) die aktuelle Position des eigenen Fahrzeugs, so daß im ACC-System auch Informationen über den Straßentyp (Autobahn oder Landstraße) sowie über bevorstehende Ausfahrten, Kreuzungen, Einmündungen, Kurven und dergleichen zur Verfügung stehen.

Insbesondere läßt sich aus den in der digitalen Karte gespeicherten Daten die Krümmung des unmittelbar voraus liegenden Fahrbahnabschnitts bestimmen. Diese Information kann zum einen zur Verbesserung der Kursprädiktion im Prädiktionsmodul 16 genutzt werden. Sie kann jedoch, insbesondere im Freifahrtmodus, auch dazu benutzt werden, die Längsführung des Fahrzeugs zu verbessern. Unter Vorgabe einer vom Fahrzeugtyp abhängigen maximalen Querbeschleunigung, die noch als komfortabel empfunden wird, läßt sich nämlich anhand der Fahrbahnkrümmung ein oberer Grenzwert für die Geschwindigkeit berechnen, mit der der betreffende Fahrbahnabschnitt durchfahren werden sollte. Wenn dieser Grenzwert kleiner ist als die Wunschgeschwindigkeit, so ist es zweckmäßig, die Geschwindigkeitsregelung so zu modifizieren, daß nicht auf die Wunschgeschwindigkeit, sondern auf den Grenzwert geregelt wird.

Darüber hinaus läßt sich anhand der vom Navigationssystem gelieferten Daten auch entscheiden, ob es sich bei dem voraus liegenden Fahrbahnabschnitt um eine Landstraße außerhalb geschlossener Ortschaften oder um eine innerörtliche Straße handelt, so daß dann als Grenzwert die für den betreffenden Straßentyp geltende gesetzliche Höchstgeschwindigkeit gewählt werden kann. Entsprechendes gilt auch in den Fällen, in denen ein "intelligentes" Navigationssystem Informationen über etwa bestehende Geschwindigkeitsbeschränkungen bereitstellt.

Wenn jedoch vor einer Kreuzung, Abzweigung oder Weggabelung mehrere mögliche Fahrtrouten zur Verfügung stehen, was ebenfalls anhand der Daten des Navigationssystems erkennbar ist, so müssen bestimmte Annahmen darüber gemacht werden, welcher Route der Fahrer voraussichtlich folgen wird, damit das System in jeder Situation ein definiertes Verhalten zeigt. Aus diesem Grund weist die in Figur 1 gezeigte Vorrichtung ein Modul 26 auf, das anhand der Daten des Navigationssystems 24 solche Mehrdeutigkeiten der Fahrtroute erkennt. Um solche Mehrdeutigkeiten zu beseitigen oder zumindest einzugrenzen, erhält das Modul 26 zusätzlich Signale von einem Zustandssensor 28, der den aktuellen-Zustand des Fahrtrichtungsanzeigers (Blinkers) des eigenen Fahrzeugs angibt. Wenn beispielsweise eine Abbiegemöglichkeit nach rechts besteht und der rechte Blinker gesetzt ist, so läßt sich daraus schließen, daß der Fahrer beabsichtigt, nach rechts abzubiegen, und für die Bestimmung des Geschwindigkeits-Grenzwertes ist dann folglich die nach rechts abbiegende Route maßgeblich. Wenn jedoch weder der rechte noch der linke Blinker gesetzt ist, bleibt die Situation mehrdeutig, denn es ist unklar, ob der Fahrer wirklich geradeaus fahren will oder nur vergessen hat, den Blinker zu setzen. Eine Beseitigung der Mehrdeutigkeit ist dann eventuell dadurch möglich, daß das Lenkverhalten des Fahrers ausgewertet wird. Zu diesem Zweck erhält das Modul 26 im gezeigten Beispiel auch das Signal des Gierratensensors 18.

Wenn im Navigationssystem 24 die Zielführungsfunktion aktiviert ist, so kann wahlweise zur Beseitigung der Mehrdeutigkeit auch angenommen werden, daß der Fahrer der vom Zielführungssystem berechneten Route folgen wird. In dem hier betrachteten Beispiel soll die vom Zielführungssystem berechneten Route jedoch unberücksichtigt bleiben. In einer anderen Ausführungsform kann die Begrenzungseinrichtung auch so programmiert sein, daß sie auch im Freifahrtmodus nur dann aktiv wird, wenn die voraussichtliche Route des eigenen Fahrzeugs bekannt ist, also beispielsweise, wenn die Zielführungsfunktion aktiv ist.

Wenn in einer Folgefahrlsituation ein Zielobjekt ausgewählt ist und verfolgt wird, so ist es für die Zwecke der Abstandsregelung eine sinnvolle Annahme, daß das eigene Fahrzeug dem Kurs des Zielobjekts folgen wird. Diese Annahme liegt der Kursprädiktion im Prädiktionsmodul 16 zugrunde.

Im Freifahrtmodus erfolgt die Berechnung des oben erwähnten Geschwindigkeits-Grenzwertes in einer Begrenzungseinrichtung 30, die vom Modul 26 die Fahrbahndaten aller möglichen Routen erhält, die nach weitestgehender Beseitigung der Mehrdeutigkeit noch übrig bleiben. Außerdem erhält die Begrenzungseinrichtung 30 vom Plausilisierungsmodul 20 die Information, ob ein Zielobjekt ausgewählt ist oder nicht. Wenn ein Zielobjekt ausgewählt ist, also im Folgefahrtmodus, bleibt die Begrenzungseinrichtung 30 inaktiv, und im Regler 22 erfolgt die Abstandsregelung auf das Zielobjekt unabhängig von den Daten, die das Navigationssystem 24 bereitstellt.

Im Freifahrtmodus berechnet die Begrenzungseinrichtung 30 für jede der möglichen Routen einen gesonderten Grenzwert, jeweils anhand der für die betreffende Route geltenden Fahrbahnkrümmung. Die Begrenzungseinrichtung 30 wählt dann den größten der so berechneten Grenzwerte aus und vergleicht ihn mit der vom Fahrer gewählten Wunschgeschwindigkeit. Der kleinere der beiden miteinander verglichenen Werte wird dann als Sollgeschwindigkeit an den Regler 22 übergeben.

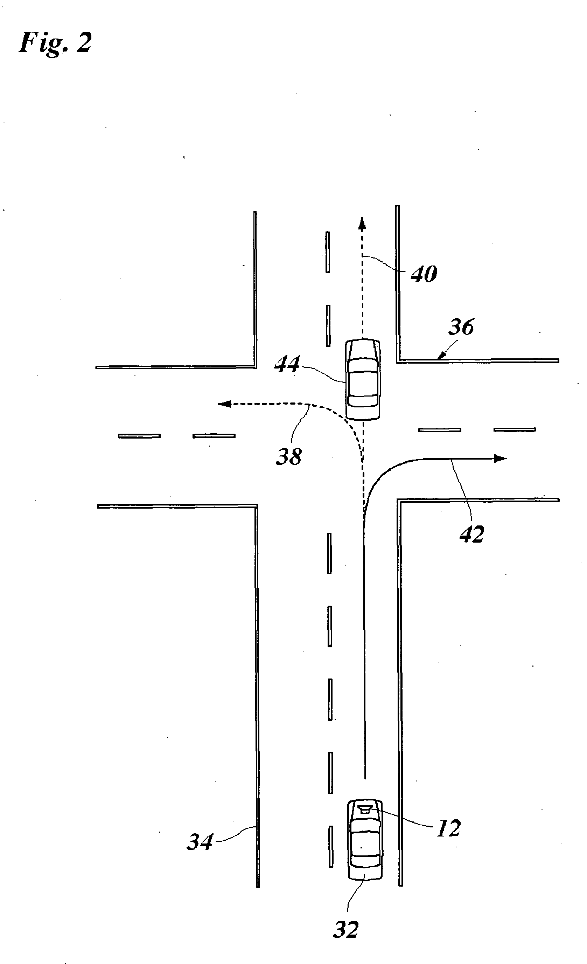

In Figur 2 ist die Wirkungsweise der oben beschriebenen Vorrichtung anhand eines Beispiels illustriert.

Ein Fahrzeug 32, das mit der Vorrichtung nach Figur 1 ausgerüstet ist, nähert sich auf einer vorfahrtberechtigten Straße 34 einer Kreuzung 36. Für das Fahrzeug 32 stehen somit drei mögliche Routen 38, 40 und 42 zur Verfügung, die sich in der Fahrbahnkrümmung unterscheiden. Die Routen 38 und 42 können nur mit einer deutlich geringeren Geschwindigkeit befahren werden als die Route 40.

Das ACC-System 10 befindet sich im Folgefahrtmodus und verfolgt als Zielobjekt ein vorausfahrendes Fahrzeug 44, das gerade die Kreuzung 36 überquert. Solange über die Route des Fahrzeugs 32 nichts bekannt ist, gilt die Annahme, daß das Zielobjekt weiterhin verfolgt wird. Der Regler 22 regelt somit die Geschwindigkeit des Fahrzeugs 32 so, daß das Fahrzeug 44 in einem geeigneten zeitlichen Abstand verfolgt wird. Auch wenn die Straße 34 im weiteren Verlauf enge Kurven aufweisen sollte und das Fahrzeug 44 seine Geschwindigkeit verringert, würde der Regler 22 die Zeitlücke zwischen dem Zielobjekt und dem Fahrzeug 32 im wesentlichen konstant halten, da die Begrenzungseinrichtung 30 nicht aktiv ist.

In der in Figur 2 gezeigten Situation erkennt nun das Modul 26, daß der Fahrer des Fahrzeugs 32 den rechten Blinker betätigt, woraus folgt, daß das Fahrzeug 32 der Route 42 folgen, also nach rechts abbiegen wird. Alternativ könnte dies auch daran erkannt werden, daß das Zielführungssystem des Navigationssystems 24 die Route 42 berechnet hat.

Das Modul 26 veranlaßt nun das Prädiktionsmodul 16, die Kursprädiktion zu korrigieren, so daß das Zielobjekt nicht mehr im prädizierten Fahrschlauch liegt. Durch das Plausibilisierungsmodul 20 wird folglich das Zielobjekt verworfen, so daß das System in den Freifahrtmodus übergeht. Dementsprechend wird die Begrenzungseinrichtung 30 aktiviert, so daß sie die Sollgeschwindigkeit für den Regler 22 so begrenzt, daß der Abbiegevorgang mit einer angepaßten Geschwindigkeit durchgeführt werden kann. Fährt der Fahrer des Fahrzeugs 32 entgegen der Erwartung geradeaus, wird das Zielobjekt wieder erfaßt und das System kehrt in den Folgefahrtmodus zurück und deaktiviert die Begrenzungseinrichtung 30.

In einer modifizierten Ausführungsform werden bereits vor der in Figur 2 gezeigten Situation die Geschwindigkeits-Grenzwerte für die drei möglichen Routen 38, 40 und 42 berechnet. Schon bevor das Fahrzeug 44 die Kreuzung 36 erreicht hat, kann dann das System erkennen, daß die Geschwindigkeit des Zielobjekts für die Routen 38 und 42 zu hoch ist, und es kann daraus den Schluß ziehen, daß das Zielobjekt der Route 40 folgen wird, also von der eigenen Route 42 abweichen wird. In diesem Fall kann die Begrenzungseinrichtung 30 bereits aktiviert werden, obwohl das System einstweilen noch im Folgefahrtmodus bleibt. Durch die Begrenzungseinrichtung wird dann die Abstandsregelung nicht völlig aufgehoben, sondern es wird lediglich die Sollgeschwindigkeit nach oben begrenzt, so daß das Fahrzeug 32 für den Abbiegevorgang verzögert wird und auch nicht zu dicht auf das Zielobjekt auffährt, wenn dieses Zielobjekt seine Fahrt verlangsamen sollte.

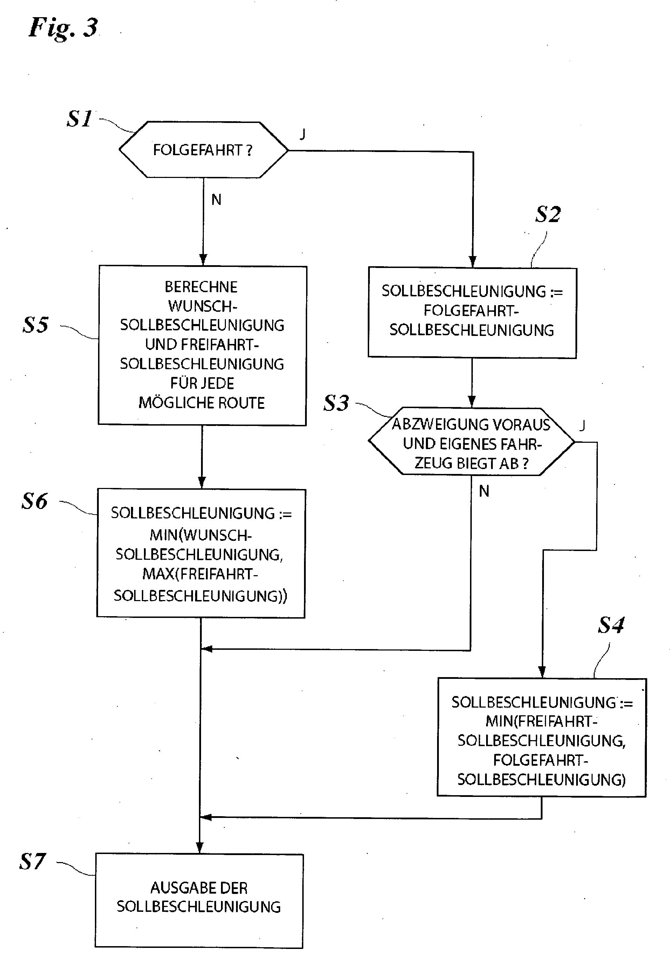

In Figur 3 ist in einem Flußdiagramm eine leicht modifizierte Funktionsweise der Vorrichtung dargestellt, die jedoch im Ergebnis zu der oben beschriebenen Funktionsweise äquivalent ist.

In Schritt S1 wird entschieden, ob sich das ACC-System 10 im Folgefahrtmodus (J) oder im Freifahrtmodus (N) befindet. Wenn sich das System im Folgefahrtmodus befindet, berechnet der Regler 22 in Schritt S2 anhand der vom Tracking-Modul 14 gelieferten Daten über das Zielobjekt als Sollbeschleunigung eine Folgefahrt-Sollbeschleunigung, die sicherstellt, daß das Zielobjekt mit der vorgegebenen Zeitlücke verfolgt wird.

In Schritt S3 überprüft dann das Modul 26 noch im Folgefahrtmodus, ob im Vorfeld des Fahrzeugs 32 eine Abzweigung oder die Kreuzung 36 vorhanden ist und ob das Fahrzeug 32 abbiegen wird. Wenn dies der Fall ist, wird in Schritt S4 eine Freifahrt-Sollbeschleunigung berechnet, durch die das Fahrzeug so verzögert wird, daß seine Geschwindigkeit während des Abbiegevorgangs höchstens gleich dem berechneten Grenzwert ist. Als endgültige Sollbeschleunigung wird dann das Minimum aus der so berechneten Freifahrt-Sollbeschleunigung und der Folgefahrt-Sollbeschleunigung aus Schritt S2 gewählt.

Im Freifahrtmodus werden dagegen in Schritt S5 durch die Begrenzungseinrichtung 30 eine Wunsch-Sollbeschleunigung sowie Freifahrt-Sollbeschleunigungen für jede der möglichen Routen berechnet. Die Wunsch-Sollbeschleunigung ist diejenige Beschleunigung, die erforderlich ist, die vom Fahrer gewählte Wunschgeschwindigkeit zu halten oder wieder zu erreichen. Die Freifahrt-Sollbeschleunigungen sind von der Fahrbahnkrümmung und/oder sonstigen Fahrbahnmerkmalen der betreffenden Route abhängig. Bei deren Berechnung greift die Begrenzungseinrichtung 30 auf die vom Navigationssystem 24 bereitgestellten Fahrbahndaten für die vom Modul 26 als möglich erachteten Routen zurück. In Schritt S6 berechnet die Begrenzungseinrichtung 30 dann als Sollbeschleunigung das Minimum aus der Wunsch-Sollbeschleunigung und dem Maximum der Freifahrt-Sollbeschleunigungen.

In Schritt S7 wird dann durch den Regler 22 entweder die in Schritt S2 oder S4 berechnete Sollbeschleunigung oder die in Schritt S6 berechnete Sollbeschleunigung an das Antriebs- und/oder Bremssystem des Fahrzeugs ausgegeben.

Bei diesem Ausführungsbeispiel wird somit anders als bei dem zuvor beschriebenen Ausführungsbeispiel nicht auf die Soll geschwindigkeit, sondern auf die Sollbeschleunigung abgestellt. Auch hier erfolgt jedoch in den Schritten S4 und S5 die Berechnung der Freifahrt-Sollbeschleunigungen in der Weise, daß zunächst für jede Route anhand der Fahrbahnkrümmung ein Grenzwert für die Geschwindigkeit bestimmt wird, und die Sollbeschleunigung wird dann so berechnet, daß die tatsächliche Geschwindigkeit bei Erreichen des betreffenden Fahrbahnabschnitts dem Grenzwert entspricht. Die Grenzwerte sind somit implizit in den Freifahrt-Sollbeschleunigungen enthalten, und die in den Schritten S4 und S6 berechneten Sollbeschleunigungen implizieren eine Begrenzung der Sollgeschwindigkeit.

## Patentansprüche

1. Vorrichtung zur Längsführung eines Kraftfahrzeugs, mit einem Sensorsystem (12) zur Ortung vorausfahrender Fahrzeuge (44), einem Regler (22), der die Geschwindigkeit des Fahrzeugs (32) auf eine Sollgeschwindigkeit regelt, entweder in einem Freifahrtmodus oder in einem Folgefahrtmodus, in dem die Sollgeschwindigkeit vom Abstand zu einem vorausfahrenden Fahrzeug (44) abhängig ist, sowie mit einer Schnittstelle zu einem Navigationssystem (24), das Informationen über die befahrene Route (42) bereitstellt, und einer Begrenzungseinrichtung (30) zur Begrenzung der Sollgeschwindigkeit anhand der bereitgestellten Informationen, **dadurch gekennzeichnet,** die Begrenzungseinrichtung (30) dazu ausgebildet ist, sich bei einem Wechsel vom Freifahrtmodus in den Folgefahrtmodus selbst zu deaktivieren und sich bei einem Wechsel vom Folgefahrtmodus in den Freifahrtmodus selbst zu aktivieren.

2. Vorrichtung nach Anspruch 1, **dadurch gekennzeichnet, daß** ein Modul (26) dazu ausgebildet ist, im Folgefahrtmodus anhand der Daten des Navigationssystems (24) zu erkennen, daß mehrere mögliche Routen (38, 40, 42) zur Verfügung stehen, daß die Vorrichtung weiterhin dazu ausgebildet ist, eine Situation zu erkennen, in der die voraussichtlich von dem vorausfahrenden Fahrzeug (44) verfolgte Route (40) von der voraussichtlich vom eigenen Fahrzeug (32) verfolgten Route (42) abweicht und die Route (42) des eigenen Fahrzeugs nur eine deutlich geringere Geschwindigkeit zuläßt als die Route (40) des vorausfahrenden Fahrzeugs, und in dieser Situation die Begrenzungseinrichtung (30) zu aktivieren.

3. Vorrichtung nach Anspruch 2, **dadurch gekennzeichnet, daß** das Modul (26) dazu ausgebildet ist, anhand der Daten des Navigationssystems (24) die Annäherung des eigenen Fahrzeugs (32) an eine Abzweigung oder Kreuzung (36) zu erkennen und dann anhand zusätzlicher Informationen einen Abbiegewunsch des Fahrers des eigenen Fahrzeugs zu erkennen.

4. Vorrichtung nach Anspruch 3, **dadurch gekennzeichnet, daß** eine der zusätzlichen Informationen ein Signal eines Zustandssensors (28) ist, der den Zustand eines Fahrtrichtungsanzeigers des Fahrzeuges (32) angibt.

5. Vorrichtung nach Anspruch 3 oder 4, **dadurch gekennzeichnet, daß** eine der zusätzlichen Informationen die Zielführungsinformation des Navigationssystems (24) über eine berechnete Fahrtroute ist.

6. Vorrichtung nach einem der vorstehenden Ansprüche, **dadurch gekennzeichnet, daß** die Begrenzungseinrichtung (30) dazu ausgebildet ist, im Freifahrtmodus bei erkannter Mehrdeutigkeit der Fahrtroute für jede mögliche Route (40, 42) einen Grenzwert für die Sollgeschwindigkeit zu berechnen und den größten dieser Grenzwerte für die Begrenzung der Sollgeschwindigkeit auszuwählen.

7. Vorrichtung nach Anspruch 6, **dadurch gekennzeichnet, daß** die Grenzwerte für die Sollgeschwindigkeit von der vom Navigationssystem (24) bereitgestellten Information über die Fahrbahnkrümmung auf der betreffenden Route (40, 42) abhängig sind.

## Claims

1. Device for longitudinally guiding a motor vehicle, having a sensor system (12) for locating vehicles (44) travelling in front, a closed-loop controller (22) which adjusts the velocity of the vehicle (32) to a target velocity, either in a free travel mode or in a follow-on travel mode in which the target velocity is dependent on the distance from a vehicle (44) travelling in front, and having an interface to a navigation system (24) which makes available information about the route (42) being travelled on, and a limiting device (30) for limiting the target velocity on the basis of the information which is made available, **characterized in that** the limiting device (30) is designed to deactivate itself at a changeover from the free travel mode into the follow-on travel mode and to activate itself at a changeover from the follow-on travel mode into the free travel mode.

2. Device according to Claim 1, **characterized in that** a module (26) is designed to detect, on the basis of the data from the navigation system (24) in the follow-on travel mode, that a plurality of possible routes (38, 40, 42) are available, **in that** the device is also designed to detect a situation in which the route (40) which is expected to be followed by the vehicle (44) which is travelling in front deviates from the route (42) which is expected to be followed by the driver's own vehicle (32), and the route (42) of the driver's own vehicle only permits a significantly lower velocity than the route (40) of the vehicle travelling in front, and to activate the limiting device (30) in this situation.

3. Device according to Claim 2, **characterized in that** the module (26) is designed to detect, on the basis of the data from the navigation system (24), the approach of the driver's own vehicle (32) to a junction or intersection (36) and then to detect a request by the driver to turn off from the road with his own vehicle on the basis of additional information.

4. Device according to Claim 3, **characterized in that** one of the additional items of information is a signal of a state sensor (28) which indicates the state of a travel direction indicator of the vehicle (32).

5. Device according to Claim 3 or 4, **characterized in that** one of the additional items of information is the routing information of the navigation system (24) about a calculated route.

6. Device according to one of the preceding claims, **characterized in that** the limiting device (30) is designed to calculate a limiting value for the target velocity when ambiguity of the route for each possible route (40, 42) is detected in the free travel mode, and to select the highest of these limiting values for the limitation of the target velocity.

7. Device according to Claim 6, **characterized in that** the limiting values for the target velocity are dependent on the information, made available by the navigation system (24), about the curvature of the carriageway on the respective route (40, 42).

## Revendications

1. Dispositif de guidage longitudinal d'un véhicule automobile comportant :
- un système de capteurs (12) pour localiser les véhicules (44) qui précèdent,
- un régulateur (22) qui assure la régulation de la vitesse du véhicule (32) sur une vitesse de consigne, soit en mode de conduite libre, soit en mode de conduite en poursuite, selon lequel la vitesse de consigne dépend de la distance par rapport au véhicule (44) qui précède,
- une interface avec un système de navigation (24) qui fournit les informations concernant le trajet (42) utilisé, et
- une installation de limitation (30) pour limiter la vitesse de consigne à l'aide des informations fournies,
**caractérisé en ce que**
l'installation de limitation (30) est réalisée pour qu'en cas d'alternance du mode de conduite libre au mode de conduite en poursuite, le dispositif se neutralise automatiquement lors du passage du mode de conduite libre au mode de conduite en poursuite et qu'il s'active automatiquement lors du passage du mode de conduite en poursuite au mode de conduite libre.

2. Dispositif selon la revendication 1,
**caractérisé par**
un module (26) réalisé pour qu'en mode de conduite en poursuite, il reconnaisse, à l'aide des données fournies par le système de navigation (24), que plusieurs trajets (38, 40, 42) sont possibles, et le dispositif est en outre réalisé pour reconnaître une situation dans laquelle le trajet (40) prévisible suivi par le véhicule (44) qui précède dévie du trajet (42) prévisible suivi par le propre véhicule (32), et que le trajet (42) du propre véhicule (32) n'autorise qu'une vitesse significativement plus faible que le trajet (40) du véhicule (44) qui précède et que dans cette situation, il faut activer l'installation de limitation (30).

3. Dispositif selon la revendication 2,
**caractérisé en ce que**
le module (26) est réalisé pour qu'à l'aide des données du système de navigation (24), il reconnaisse que le propre véhicule (32) se rapproche d'une dérivation ou d'un croisement (36) et qu'à l'aide d'informations supplémentaires, il détecte une demande de changement de direction du conducteur du propre véhicule.

4. Dispositif selon la revendication 3,
**caractérisé en ce qu'**
une des informations supplémentaires est le signal d'un capteur d'état (28) indiquant l'état d'un indicateur de direction du véhicule (32).

5. Dispositif selon la revendication 3 ou 4,
**caractérisé en ce qu'**
une des informations supplémentaires est une information de guidage vers la destination du système de navigation (24) par un trajet calculé.

6. Dispositif selon les revendications précédentes,
**caractérisé en ce que**
l'installation de limitation (30) est réalisée pour qu'en mode de conduite libre, en cas de plurivalence de trajets, il calcule une valeur limite de la vitesse de consigne pour chaque trajet possible (40, 42) et sélectionne la plus grande des ces valeurs limites pour limiter la vitesse de consigne.

7. Dispositif selon la revendication 6,
**caractérisé en ce que**
les valeurs limites pour la vitesse de consigne dépendent de l'information fournie par le système de navigation (24) concernant la courbure de la voie de circulation sur le trajet (40, 42) concerné.
